# EUROPEAN PATENT APPLICATION

(11) **EP 4 306 924 A1**
(43) Date of publication of application: **17.01.2024**
(21) Application number: 22766872.0
(22) Date of filing: 25.02.2022
(51) Int. Cl.: G01L 9/00

(54) **PRESSURE SENSOR AND SENSOR SYSTEM**

(30) Priority: 12.03.2021 JP 2021040088
(71) Applicant: TDK Corporation, Tokyo 103-6128 (JP)
(72) Inventor: SASAHARA, Tetsuya, Tokyo 103-6128 (JP); UNNO, Ken, Tokyo 103-6128 (JP); KOBAYASHI, Masanori, Tokyo 103-6128 (JP); NAWAOKA, Kohei, Tokyo 103-6128 (JP)
(74) Representative: Epping - Hermann - Fischer
(86) International application number: PCT/JP2022/008053
(87) International publication number: WO 2022/190913

(57) **Abstract**

**Abstract:** [Problem] To provide a pressure sensor and a sensor system which are able to easily detect the state of power supplied to a detection circuit. [Solution] A pressure sensor 10 comprises: a membrane 22 in which deformation in response to pressure occurs; a plurality of sensor resistors R1-R4 which are formed on the membrane 22 and constitute a detection circuit 30; and a detection resistor Rs which is formed on the membrane 22 and is for detecting the state of power supplied to the detection circuit 30, wherein one end of the detection resistor Rs is electrically connected to the detection circuit 30, and the other end of the detection resistor Rs is electrically connected to a fifth electrode 45 which is formed on the membrane 22.

## Description

The present invention relates to a pressure sensor that detects strain caused by deformation of a membrane based on change in resistance and to a sensor system including such pressure sensors.

### Background

Various techniques are now proposed for pressure sensors utilizing piezoresistive effect. This type of pressure sensor is provided with, for example, a metallic pressure-receiving member referred to as a stem, and a part of the stem is formed with a membrane that deforms in response to external force (pressure). Resistors whose electrical resistances change according to the deformation of the membrane are provided on the membrane, and the resistors form a detection circuit (bridge circuit). When the electrical resistances of the resistors change, an electrical signal corresponding to the amount of change is output from the detection circuit. The detection of this output can measure the change in electrical resistances of resistors and calculate the pressure applied to the membrane based on this measured value.

By the way, an electric power source for supplying electric power is connected to the detection circuit, and the electric power supplied from the electric power source is controlled by, for example, a switch. If the switch fails, the wire bonding connecting between the switch and the detection circuit is disconnected, it becomes difficult to supply a normal electric power to the detection circuit, and the normal operation of the pressure sensor is hindered. Thus, preferably, the pressure sensor is provided with the means for detecting the state of electric power supplied to the detection circuit.

In order to enable more accurate measurement, now proposed is a technique of constructing a sensor system with pressure sensors and calculating the pressure applied to the membrane based on the outputs from the pressure sensors (See Patent Document 1). In such a sensor system, in order to drive the pressure sensors, for example, it is conceivable to connect detection circuits for pressure sensors to a common electric power source, to connect switches to the detection circuits, and to control the electric power supplied from the common electric power source to the detection circuits. In this case, the pressure sensors may have the switch failure, the disconnection of wire bonding, or the like, described above. Thus, the sensor system is preferably provided with the means for detecting the state of electric power supplied to the detection circuits. However, such means may complicate the circuits and control and is not easy to implement.

### Prior Arts

### Patent Document

Patent Document 1: JP2009543093 (A)

### Summary of Invention

### Problems to be solved by Invention

The present invention has been made in view of such problems, and an object thereof is to provide a pressure sensor and a sensor system capable of easily detecting the state of electric power supplied to a detection circuit.

### Means for solving the Problem

To achieve the above object, a pressure sensor according to the present invention comprises:
a membrane deformable according to pressure;
sensor resistors formed on the membrane and constituting a detection circuit; and
a detection resistor formed on the membrane and having one end electrically connected to the detection circuit and an other end electrically connected to an electrode portion formed on the membrane.

The pressure sensor according to the present invention includes a detection resistor having one end electrically connected to the detection circuit and an other end electrically connected to an electrode portion formed on the membrane. Thus, the electric current or the like flowing through the detection resistor is detected via the electrode portion, and it is thereby possible to easily detect the state of electric power supplied to the detection circuit based on the detected value.

Moreover, in the pressure sensor according to the present invention, since the detection resistor is formed on the membrane, it is possible to prevent the device from being complicated compared to when the detection resistor is formed at a position different from that of the membrane. Also, as a technique for forming the detection resistor on the membrane, for example, it is possible to use a technique similar to the technique for forming sensor resistors constituting the detection circuit on the membrane. In this case, not only can the detection resistor be formed with the same level of accuracy as the sensor resistor, but also the shape, formation position, or the like of the detection resistor can be determined comparatively freely. Thus, with a simple configuration, the state of electric power supplied to the detection circuit can be detected with high accuracy based on the detected value of the detection resistor.

Preferably, one end of the detection resistor is electrically connected to a conductive path between the detection circuit and an electric power source for supplying electric power to the detection circuit. In this configuration, if there is an abnormality in the state of electric power supplied to the detection circuit, it is possible to easily determine whether or not this abnormality is caused by the abnormality in the electric power supply line between the electric power source and the detection circuit.

Preferably, the detection resistor comprises detection resistors, the electrode portion comprises electrode portions, and the electrode portions are electrically connected to the respective other ends of the detection resistors. In this configuration, it is possible to detect the electric current or the like flowing through each of the detection resistors via each of the electrode portions electrically connected to the other ends of the respective detection resistors. Thus, even if it becomes impossible to detect the electric current or the like flowing through the detection resistor electrically connected to any of the electrode portions due to the effects of disconnection, etc., it is still possible to detect the electric currents or the like flowing through the detection resistors electrically connected to the other electrode portions. Thus, the availability for detecting the state of electric power supplied to the detection circuit can be enhanced. Moreover, it is possible to distribute electric current to the detection resistors and to improve the durability of each of the detection resistors.

To achieve the above object, a sensor system according to the present invention comprises any of the above-described pressure sensors, wherein
the detection circuits provided to the respective pressure sensors are electrically connected to a common electric power source, and
the electrode portions electrically connected to the other ends of the detection resistors provided to the respective pressure sensors are electrically connected to each other.

In the sensor system according to the present invention, the detection circuits provided to the respective pressure sensors are electrically connected to a common electric power source, and electric power is supplied from the common electric source to the respective pressure sensors. Moreover, the electrode portions electrically connected to the other ends of the detection resistors provided to the respective pressure sensors are electrically connected to each other, and the sum of electric currents or the like flowing through the respective detection resistors is output via this connection point. Thus, if there is an abnormality in the state of electric power supplied to any of the detection circuits, the sum of electric currents or the like flowing through the respective detection resistors output from this connection point varies, and based on this variation range, it is possible to easily detect the state of electric power supplied to each of the detection circuits.

Preferably, the detection resistors provided to the respective pressure sensors have different resistance values. In this configuration, if there is an abnormality in the state of electric power supplied to any of the detection circuits, the variation range of the sum of electric currents flowing through the respective detection resistors output from the above-described connection point is a unique value corresponding to the resistance value of the detection resistor connected to this detection circuit. Thus, based on this unique value, it is possible to easily determine which detection circuit has an abnormality in the state of electric power supplied.

Preferably, the detection resistors provided to the respective pressure sensors have stepwise resistance values set at a predetermined ratio. When the sensor system is provided with n detection circuits (n: a natural number), various combinations of detection circuits that may have an abnormality in the state of electric power supplied are conceivable. In the configuration as described above, the sum of electric currents flowing through the respective detection resistors output from the above-described connection point can be prevented from taking a duplicate value in each combination, and it is possible to determine with high accuracy which detection circuit has an abnormality in the state of electric power supplied.

Each of the pressure sensors may be provided with the detection resistors having different resistance values, and the electrode portions electrically connected to the other end of any one of the detection resistors provided to the respective pressure sensors may be electrically connected to each other between the pressure sensors. In this way, since each of the pressure sensors is provided in advance with detection resistors, a detection resistor having a desired resistance value can be appropriately selected from the detection resistors and used according to usage conditions.

Preferably, diodes are electrically connected to the other ends of the detection resistors provided to the respective pressure sensors, and the electrode portions electrically connected to the other ends of the detection resistors provided to the respective pressure sensors are electrically connected to each other via the diodes. In this configuration, if there is an abnormality in the state of electric power supplied to any of the detection circuits, it is possible to prevent electric current from flowing into this detection circuit from the other detection circuits.

### Brief Description of the Drawings

FIG. 1 is a schematic cross-sectional view of a pressure sensor according to First Embodiment of the present invention;
FIG. 2 is a schematic plan view illustrating a detection circuit and an electric-power-state detection unit formed on a membrane shown in FIG. 1;
FIG. 3 is an equivalent circuit diagram of the detection circuit and the electric-power-state detection unit shown in FIG. 2;
FIG. 4A is a circuit diagram illustrating the configuration of a sensor system formed by connecting pressure sensors each including the detection circuit and the electric-power-state detection unit shown in FIG. 3;
FIG. 4B is a circuit diagram illustrating a state where a switch for controlling electric power supplied to any one detection circuit has an abnormality and is turned off unintentionally in the sensor system shown in FIG. 4A;
FIG. 4C is a circuit diagram illustrating a state where each switch for controlling electric power supplied to each of any two detection circuits has an abnormality and is turned off unintentionally in the sensor system shown in FIG. 4A;
FIG. 4D is a circuit diagram illustrating a state where an abnormality occurs in a wire bonding connecting a switch for controlling electric power supplied to any one detection circuit and this detection circuit in the circuit shown in FIG. 4A;
FIG. 5 is a circuit diagram illustrating a modified example of the electric-power-state detection unit shown in FIG. 4A;
FIG. 6 is a graph illustrating a value of Is for each pattern shown in Table 1;
FIG. 7 is a circuit diagram illustrating the configuration of a sensor system formed by connecting pressure sensors according to Second Embodiment of the present invention;
FIG. 8 is a schematic plan view illustrating a detection circuit and an electric-power-state detection unit of a pressure sensor according to Third Embodiment of the present invention;
FIG. 9 is an equivalent circuit diagram of the detection circuit and the electric-power-state detection unit shown in FIG. 8; and
FIG. 10 is a circuit diagram illustrating the configuration of a sensor system formed by connecting pressure sensors according to Fourth Embodiment of the present invention.

### Detailed Description of Invention

Hereinafter, the present invention is described based on embodiments shown in the figures.

### First Embodiment

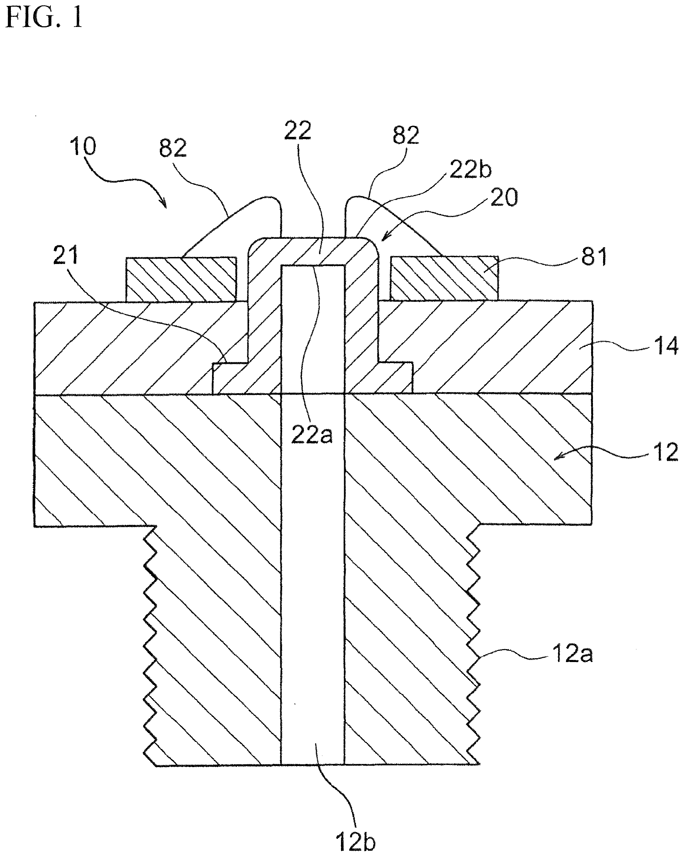

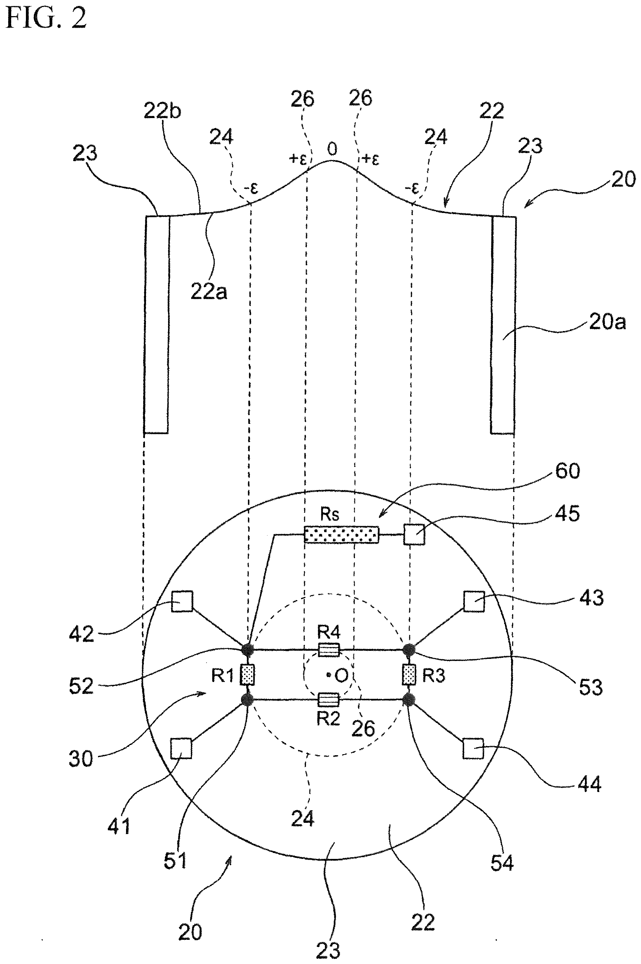

As shown in FIG. 1, a pressure sensor 10 includes a membrane 22 that deforms according to pressure. In the example shown in FIG. 1, the upper bottom of a stem 20 is the membrane 22. In addition to the stem 20 including the membrane 22, the pressure sensor 10 includes a connection member 12 formed with a flow path 12b for transmitting pressure to the stem 20, a holding member 14 for fixing the stem 20 to the connection member 12, a substrate portion 81 wired to electrode portions 41 to 45 (see FIG. 2) etc. on the membrane 22, and the like.

A screw groove 12a for fixing the pressure sensor 10 to an object to be measured is formed on the outer circumference of the connection member 12. The pressure sensor 10 is fixed to the object via the screw groove 12a, and the flow path 12b formed inside the connection member 12 can be thereby airtightly communicated with a pressure chamber to be measured.

The stem 20 has a cylindrical outer shape with a bottom (upper bottom) and is provided at one end of the flow path 12b in the connection member 12. The stem 20 is manufactured by, for example, machining a metal, such as stainless steel, or an alloy. The material of the stem 20 is not limited as long as an appropriate elastic deformation is generated. A flange portion 21 is provided on the opening side of the stem 20, and the stem 20 is fixed to the connection member 12 by sandwiching the flange portion 21 between the holding member 14 and the connection member 12. The opening of the stem 20 and the flow path 12b of the connection member 12 are airtightly connected using the holding member 14, and the pressure to be measured is transmitted to the membrane 22 of the stem 20.

The membrane 22, which is the upper bottom of the stem 20, is thinner than other parts of the stem 20, such as a side wall 20a (see FIG. 2), and deforms according to the pressure transmitted from the flow path 12b. The membrane 22 includes an inner surface 22a that contacts with the pressure fluid and an outer surface 22b opposite to the inner surface 22a. A detection circuit 30 mentioned below, the electrode portions 41 to 45 (see FIG. 2), and the like are provide on the outer surface 22b side of the membrane 22.

The substrate portion 81 is fixed to the holding member 14. The substrate portion 81 includes wirings, electrode portions, and the like electrically connected to the detection circuit, the electrode portions 41 to 45, and the like formed on the outer surface 22b of the membrane 22. The electrode portions of the substrate portion 81 and the electrode portions 41 to 45 on the membrane 22 are electrically connected via a connection wiring 82 or the like formed by wire bonding or the like. The substrate portion 81 has a ring-shaped outer shape, and the stem 20 is inserted through a through hole formed in the center of the substrate portion 81.

In FIG. 2, the figure shown in its upper part is a schematic cross-sectional view of the stem 20, and the figure shown in its lower part is a schematic plan view of the stem 20 viewed from the upper side, which is the outer surface 22b side of the membrane 22. As shown in FIG. 2, the membrane 22 is formed with a first strain region 24 that produces a strain characteristic in a predetermined direction and a second strain region 26 that produces a strain characteristic in the opposite direction to the first strain region 24. The first strain region 24 of the membrane 22 receives a pressure (positive pressure) from the inner surface 22a and produces a negative strain -ε (compressive strain), and the second strain region 26 of the membrane 22 receives a pressure (positive pressure) from the inner surface 22a and produces a positive strain +ε (tensile strain). Thus, preferably, the strain characteristic at the first strain position 24 and the strain characteristic at the second strain position 26 are in mutually different directions (a relation where different signs cancel each other out).

As shown in the upper part of FIG. 2, the first strain region 24 and the second strain region 26 are formed concentrically around the center O of the membrane 22, and the radius of the circumference indicating the first strain region 24 is larger than the radius of the circumference indicating the second strain region 26. The second strain region 26 is located at a position away from the center O of the membrane 22 by a predetermined distance in the radial direction and is formed at a central part of the membrane 22. The first strain region 24 is formed on the outside (outer circumferential side) of the second strain region 26 and located at a position away from the second strain region 26 in the radial direction of the membrane 22 by a predetermined distance. An outer periphery 23 of the membrane 22 is connected to a side wall 20a of the stem 20.

A first sensor resistor R1 to a fourth sensor resistor R4 are formed on the upper surface of the membrane 22. The first sensor resistor R1 to the fourth sensor resistor R4 are pressure detection elements and are configured to generate a strain according to the deformation of the membrane 22 and to change a resistance value by the piezoresistive effect according to the amount of strain.

The first sensor resistor R1 to the fourth sensor resistor R4 are produced by, for example, patterning a conductive thin film (a semiconductor thin film, a metal thin film, or the like) made of a predetermined material into, for example, a meander shape. The patterning of the conductive thin film is performed by fine processing or the like using semiconductor processing techniques, such as laser processing and screen printing. The conductive thin film is formed on the membrane 22 with an insulating film interposed therebetween by a thin film method, such as sputtering and vapor deposition. When the membrane 22 is made of an insulating material, such as alumina, and the outer surface 22b of the membrane 22 has insulating properties, however, the conductive thin film may be formed directly on the outer surface 22b of the membrane 22 without forming an insulating film. As the conductive thin film, for example, a strain resistance film containing Cr and Al is exemplified.

The first sensor resistor R1 and the third sensor resistor R3 are formed in the first strain region 24 and arranged so as to face each other with the center O of the membrane 22 interposed therebetween. The second sensor resistor R2 and the fourth sensor resistor R4 are formed in the second strain region 26 and arranged so as to face each other with the center O of the membrane 22 interposed therebetween. The direction in which the first sensor resistor R1 and the third sensor resistor R3 face each other is substantially orthogonal to the direction in which the second sensor resistor R2 and the fourth sensor resistor R4 face each other. Note that, the arrangement of the first sensor resistor R1 to the fourth sensor resistor R4 is not limited to the illustrated one and may be changed as appropriate.

The first sensor resistor R1 to the fourth sensor resistor R4 constitute the detection circuit 30. The detection circuit 30 is formed on the upper surface of the membrane 22 so as to straddle the first strain region 24 and the second strain region 26 and has an annular (elliptical) outer shape. The detection circuit 30 is a bridge circuit and constitutes a Wheatstone bridge in the present embodiment. However, the configuration of the detection circuit 30 is not limited to the illustrated one, and the detection circuit 30 may constitute another bridge circuit. Hereinafter, the configuration of the detection circuit 30 is described.

In the detection circuit 30, the first sensor resistor R1 and the second sensor resistor R2 are connected via a first connection point 51, the first sensor resistor R1 and the fourth sensor resistor R4 are connected via a second connection point 52, the third sensor resistor R3 and the fourth sensor resistor R4 are connected via a third connection point 53, and the second sensor resistor R2 and the third sensor resistor R3 are connected via a fourth connection point 54. That is, the first sensor resistor R1 to the fourth sensor resistor R4 are electrically and physically connected to each other via the first connection point 51 to the fourth connection point 54.

The first connection point 51 is electrically connected to the first electrode portion 41, the second connection point 52 is electrically connected to the second electrode portion 42, the third connection point 53 is electrically connected to the third electrode portion 43, and the fourth connection point 54 is electrically connected to the fourth electrode portion 44.

The first electrode portion 41 to the fourth electrode portion 44 are produced by, for example, patterning a conductive thin film (a semiconductor thin film, a metal thin film, or the like) made of a predetermined material into a predetermined shape by the same method as the first sensor resistor R1 to the fourth sensor resistor R4. Each of the first electrode portion 41 to the fourth electrode portion 44 is formed on the outer periphery 23 of the membrane 22, but the positions of the first electrode portion 41 to the fourth electrode portion 44 are not limited to the illustrated ones. For example, each of the first electrode portion 41 to the fourth electrode portion 44 may be formed at any position between the first strain region 24 and the outer periphery 23.

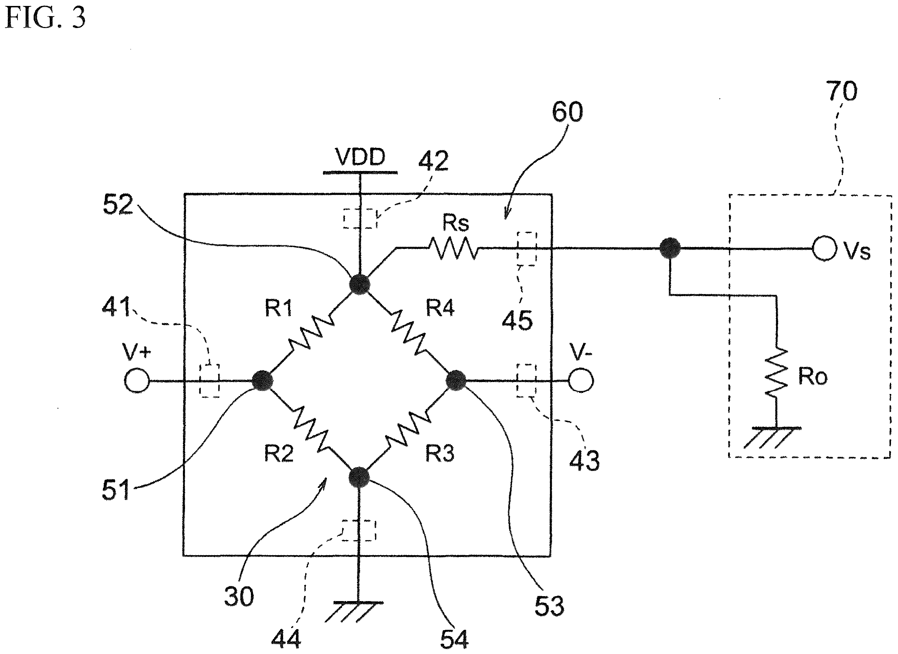

Each of the first connection point 51 to the fourth connection point 54 and each of the first electrode portion 41 to the fourth electrode portion 44 are continuously connected by the above-described conductive thin film patterned into a predetermined shape. However, each of the first connection point 51 to the fourth connection point 54 and each of the first electrode portion 41 to the fourth electrode portion 44 may be connected by, for example, wire bonding or the like. Hereinafter, the first electrode portion 41 to the fourth electrode portion 44 are described in detail with reference to FIG. 3. Note that, for easy understanding, the first electrode portion 41 to the fourth electrode portion 44 shown in FIG. 2 are virtually illustrated in FIG. 3.

As shown in FIG. 3, the second electrode portion 42 functions as a power terminal and is electrically connected to an electric power source VDD. That is, electric power (bias voltage) is supplied from the electric power source VDD to the detection circuit 30 via the second electrode portion 42. The second electrode portion 42 is connected to the electrode portion (or conductive line) on the substrate portion 81 via the connection wiring 82 or the like shown in FIG. 1. The electrode portion (or wiring) on the substrate portion 81 is electrically connected to the electric power source VDD, and the electric power source VDD and the second electrode portion 42 are thereby electrically connected.

The fourth electrode portion 44 functions as a ground terminal and is electrically connected to GND. The fourth electrode portion 44 is electrically connected to the electrode portion (or conductive line) on the substrate portion 81 via the connection wiring 82 or the like shown in FIG. 1. The potential difference between the second connection point 52 and the fourth connection point 54 is equal to the electric power source voltage.

The first electrode portion 41 functions as a first output terminal, and the voltage V+ at the first connection point 51 is output as a first detection signal via the first electrode portion 41. The first electrode portion 41 is connected to the electrode portion (or conductive line) on the substrate portion 81 via the connection wiring 82 or the like shown in FIG. 1.

The third electrode portion 43 functions as a second output terminal, and the voltage V- at the third connection point 53 is output as a second detection signal via the third electrode portion 43. The third electrode portion 43 is connected to the electrode portion (or conductive line) on the substrate portion 81 via the connection wiring 82 or the like shown in FIG. 1.

The voltage value V+ of the first detection signal output from the first electrode portion 41 and the voltage value V- of the second detection signal output from the third electrode portion 43 are amplified by, for example, utilizing a differential amplifier having a gain of A so as to obtain an output voltage V from the detection circuit 30, and a fluid pressure acting on the membrane 22 can be detected based on the output voltage V.

In the present embodiment, as shown in FIG. 2, the detection circuit 30 is provided with an electric-power-state detection unit 60. The electric-power-state detection unit 60 serves to detect the state of electric power supplied to the detection circuit 30. That is, the electric-power-state detection unit 60 can detect whether or not there is an abnormality in the state of electric power supplied from the electric power source VDD to the detection circuit 30 via the second electrode unit 42. Hereinafter, the configuration of the electric-power-state detection unit 60 is described.

The electric-power-state detection unit 60 includes a detection resistor Rs. The detection resistor Rs is a resistor for detecting the state of electric power supplied to the detection circuit 30 and is formed on the membrane 22. The detection resistor Rs is branched and extended from the detection circuit 30 on the membrane 22 and formed at a position away from the detection circuit 30.

The detection resistor Rs is formed by, for example, patterning a conductive thin film (a semiconductor thin film, a metal thin film, or the like) made of a predetermined material into a predetermined shape in the same manner as the first sensor resistor R1 to the fourth sensor resistor R4. The material used for the conductive thin film forming the detection resistor Rs may be the same as the material used for the conductive thin film forming the first sensor resistor R1 to the fourth sensor resistor R4. In this case, the detection resistor Rs can be formed with the same level of accuracy as the first sensor resistor R1 to the fourth sensor resistor R4. Instead, the detection resistor Rs may be made of a material having an electrical resistance higher than that of the material used for the conductive thin film forming the first sensor resistor R1 to the fourth sensor resistor R4.

One end of the detection resistor Rs and the detection circuit 30 are continuously connected by the above-described patterned conductive thin film. However, one end of the detection resistor Rs and the detection circuit 30 may be connected by wire bonding or the like.

In this way, the detection resistor Rs is formed in a pattern on the membrane 22, and it is thereby possible to comparatively freely determine the shape, formation position, or the like of the detection resistor Rs.

Preferably, the detection resistor Rs is formed in a region with a small strain on the upper surface of the membrane 22. In the present embodiment, the detection resistor Rs is formed in the outer periphery 23 of the membrane 22 as a region with a small strain. In such an arrangement, it is possible to prevent the resistance value of the detection resistor Rs from changing due to the influence of strain generated in the membrane 22 and to detect the state of electric power supplied to the detection circuit 30 with a high accuracy (detection sensitivity). The detection resistor Rs may extend along the circumferential direction of the membrane 22 so as to run along the outer periphery 23 of the membrane 22.

Note that, since the resistance value of the detection resistor Rs may vary slightly, the placement of the detection resistor Rs is not limited to the illustrated position and may be changed as appropriate. For example, the detection resistor Rs may be formed at any position between the first strain region 24 and the outer periphery 23 of the membrane 22. Instead, the detection resistor Rs may be formed at any position between the first strain region 24 and the second strain region 26. Instead, the detection resistor Rs may be formed in a region inside the second strain region 26. Instead, the detection resistor Rs may be formed so as to straddle the second strain region 26 along the radial direction of the membrane 22 or may be formed so as to straddle the first strain region 24 along the radial direction of the membrane 22.

When viewed as a whole, for example, the extending direction of the detection resistor Rs substantially corresponds with the circumferential direction of the membrane 22 (the detection resistor Rs extends in a meandering shape along the circumferential direction of the membrane 22). However, the extending direction of the detection resistor Rs is not limited to this, and the detection resistor Rs may extend radially along the radial direction of the membrane 22, for example.

From the viewpoint of reducing electric current consumption, the resistance value of the detection resistor Rs is preferably twice or more, more preferably ten times or more, the resistance values of the first sensor resistor R1 to the fourth sensor resistor. Preferably, the resistance value of the detection resistor Rs is larger than the resistance values of the first sensor resistor R1 to the fourth sensor resistor R4.

One end of the detection resistor Rs is electrically and physically connected to the detection circuit 30 via the second connection point 52. If one end of the detection resistor Rs is electrically connected to the detection circuit 30, however, another resistor, another element, or the like may be inserted between one end of the detection resistor Rs and the second connection point 52. Also, one end of the detection resistor Rs may be connected to a position different from that of the second connection point 52 as long as one end of the detection resistor Rs is electrically connected to the second connection point 52. For example, one end of the detection resistor Rs may be connected to a position shifted toward the first sensor resistor R1 than the second connection point 52 or may be connected to a position shifted toward the fourth sensor resistor R4 than the second connection point 52.

One end of the detection resistor Rs is connected to a terminal on the higher potential side of each of the second sensor resistor R1 and the fourth sensor resistor R4. As described above, since the second electrode portion 42 and the second connection point 52 are electrically connected to the electric power source VDD (see FIG. 3), one end of the detection resistor Rs is electrically connected to a conductive path between the electric power source VDD and the second connection point 52. In this way, since one end of the detection resistor Rs is electrically connected to the above-described conductive path, if there is an abnormality in the state of electric power supplied to the detection circuit 30, it is possible to easily determine whether or not this abnormality is caused by the abnormality in the electric power supply line from the electric power source VDD to the detection circuit 30.

The other end of the detection resistor Rs is electrically and physically connected to the fifth electrode portion 45 formed on the membrane 22. If the other end of the detection resistor Rs is electrically connected to the fifth electrode portion 45, however, another resistor, another element, or the like may be inserted between the other end of the detection resistor Rs and the fifth electrode portion 45.

The fifth electrode portion 45 is formed on the membrane 22 in the same manner as the first electrode portion 41 to the fourth electrode portion 44. The fifth electrode portion 45 is formed on the outer periphery 23 of the membrane 22 in the same manner as the first electrode portion 41 to the fourth electrode portion 44, but the position of the fifth electrode portion 45 is not limited to this. For example, the fifth electrode portion 45 may be formed at any position between the first strain region 24 and the outer periphery 23.

The other end of the detection resistor Rs and the fifth electrode portion 45 are continuously connected by the above-described patterned conductive thin film. However, the other end of the detection resistor Rs and the fifth electrode portion 45 may be connected by, for example, wire bonding.

The fifth electrode portion 45 is connected to the electrode portion (or conductive line) on the substrate portion 81 via the connection wiring 82 or the like shown in FIG. 1. This electrode portion (or conductive line) of the substrate portion 81 is electrically connected to an electric-power-source monitoring circuit 70 shown in FIG. 3. That is, the electric current flowing through the electric-power-state detection unit 60 (detection resistor Rs) is output to the electric-power-source monitoring circuit 70 via the fifth electrode portion 45, the substrate portion 81, and the like. Then, the electric current flowing through the detection resistor Rs is converted into a voltage value by the electric-power-source monitoring circuit 70, and the state of electric power supplied to the detection circuit 30 can be determined based on the converted value. Hereinafter, the configuration of the electric-power-source monitoring circuit 70 is described.

As shown in FIG. 3, the electric-power-source monitoring circuit 70 includes an output resistance Ro. However, the output resistance Ro may be formed separately from the electric-power-source monitoring circuit 70 and does not necessarily have to be included in the electric-power-source monitoring circuit 70. One end of the output resistance Ro is electrically connected to the other end of the detection resistor Rs, and the other end of the output resistance Ro is grounded. Thus, the electric current flowing through the detection resistor Rs flows into the output resistance Ro. The electric-power-source monitoring circuit 70 measures a voltage value Vs applied to the output resistance Ro at this time and determines whether or not the state of electric power supplied to the detection circuit 30 is normal based on the measured value.

For example, when electric power is normally supplied from the electric power source VDD to the detection circuit 30, a voltage having a predetermined voltage value (Vdd) is applied to the detection circuit 30. In this case, an electric current having a predetermined electric current value (Vdd/Rs) flows through the detection resistor Rs, and this electric current flows into the output resistance Ro. As a result, a voltage having a predetermined voltage value Vs (Vs = Vdd·Ro/Rs > 0) is applied to the output resistance Ro. When the voltage value Vs of the output resistance Ro satisfies the relation of Vs>0, the electric-power-source monitoring circuit 70 determines that the state of electric power supplied to the detection circuit 30 is normal.

On the other hand, when electric power is not normally supplied from the electric power source VDD to the detection circuit 30, the voltage applied to the detection circuit 30 is substantially zero. In this case, since the electric current flowing through the detection resistor Rs is substantially zero, the electric current flowing through the output resistance Ro is also substantially zero, and the voltage value Vs of the voltage applied to the output resistance Ro is substantially zero. When the voltage value Vs of the output resistance Ro satisfies the relation of Vs = 0, the electric-power-source monitoring circuit 70 determines that the state of electric power supplied to the detection circuit 30 is abnormal. Note that, the reasons why electric power is not normally supplied to the detection circuit 30 include a failure of the electric power source VDD itself, a disconnection of the connection wiring 82 (see FIG. 1) connecting between the fifth electrode portion 45 and the electrode portion (or conductive line) of the substrate portion 81.

In this way, the pressure sensor 10 according to the present embodiment includes the detection resistor Rs for detecting the state of electric power supplied to the detection circuit 30, one end of the detection resistor Rs is electrically connected to the detection circuit 30, and the other end of the detection resistor Rs is electrically connected to the fifth electrode portion 45 formed on the membrane 22. Thus, the electric current or the like flowing through the detection resistor Rs is detected via the fifth electrode portion 45 or the like, and it is thereby possible to easily detect the state of electric power supplied to the detection circuit 30 based on the detected value.

Moreover, in the pressure sensor 10 according to the present embodiment, since the detection resistor Rs is formed on the membrane 22, it is possible to prevent the device from being complicated compared to when the detection resistor Rs is formed at a position different from that of the membrane 22.

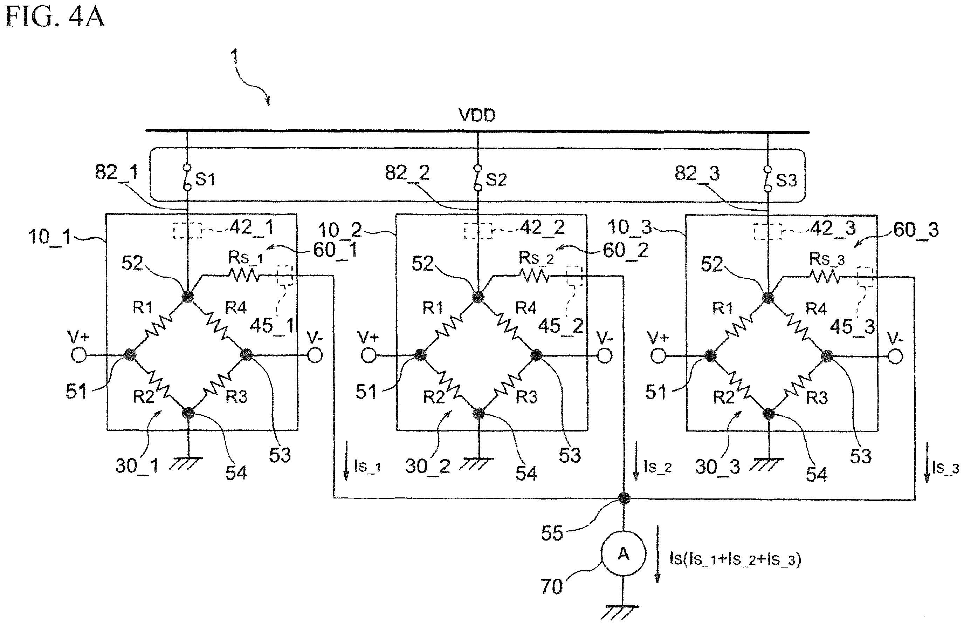

The electric-power-state detection unit 60 in the present embodiment is applicable to a sensor system provided with pressure sensors 10. Hereinafter, with reference to FIG. 4A to FIG. 6, described is a case where pressure sensors 10_1 to 10_3 are provided with electric-power-state detection units 60_1 to 60_3, respectively, in a sensor system 1 provided with the pressure sensors 10_1 to 10_3. Note that, in FIG. 4A, etc., the sensor system 1 is provided with three pressure sensors 10_1 to 10_3, but the number of pressure sensors may be two or four or more.

As shown in FIG. 4A, the pressure sensors 10_1 to 10_3 include detection circuits 30_1 to 30_3 and electric-power-state detection units 60_1 to 60_3, respectively. The detection circuits 30_1 to 30_3 have the same configuration and are similar to the detection circuit 30 shown in FIG. 3. Each of the detection circuits 30_1 to 30_3 is connected to a common electric power source VDD.

In the pressure sensor 10_1, a second electrode portion 42_1 virtually shown in the figure is electrically connected to the electric power source VDD via a switch S1. Also, in the pressure sensor 10_2, a second electrode portion 42_2 is electrically connected to the electric power source VDD via a switch S2. Moreover, in the pressure sensor 10_3, a second electrode portion 42_3 is electrically connected to the electric power source VDD via a switch S3.

That is, electric power supply from the electric power source VDD to each of the detection circuits 30_1 to 30_3 is controlled by each of the switches S1 to S3. As shown in the figure, when each of the switches S1 to S3 is ON, electric power is supplied from the electric power source VDD to each of the detection circuits 30_1 to 30_3. Each of the switches S1 to S3 and each of the second electrode portions 42_1 to 42_3 are connected via connection wirings 82_1 to 82_3 formed by wire bonding or the like.

The electric-power-state detection units 60_1 to 60_3 include detection resistors Rs_1 to Rs_3, respectively. The resistance values of the detection resistors Rs_1 to Rs_3 are different from each other. For example, the resistance value of the detection resistor Rs_1 is 40 kQ, the resistance value of the detection resistor Rs_2 is 20 kQ, and the resistance value of the detection resistor Rs_3 is 10 kS2. However, the resistance values of the detection resistors Rs_1 to Rs_3 are not limited to them and may be changed as appropriate.

Preferably, the resistance values of the detection resistors Rs_1 to Rs_3 are determined stepwise so as to be different values at a substantially constant ratio. In the present embodiment, the resistance values of the detection resistors Rs_1 to Rs_3 are, for example, 40 kS2, 20 kS2, and 10 kQ, respectively, and are determined based on the relation of geometric progression.

Fifth electrode portions 45_1 to 45_3 virtually illustrated in the figures are electrically connected to the other ends of the detection resistors Rs_1 to Rs_3, respectively, and the fifth electrode portions 45_1 to 45_3 are electrically connected to each other at a fifth connection point 55. An electric current Is_1 flowing through the electric-power-state detection unit 60_1 (detection resistor Rs_1) flows into the fifth connection point 55 via the fifth electrode unit 45_1, an electric current Is_2 flowing through the electric-power-state detection unit 60_2 (detection resistor Rs_2) flows into the fifth connection point 55 via the fifth electrode unit 45_2, and an electric current Is_3 flowing through the electric-power-state detection unit 60_3 (detection resistor Rs_3) flows into the fifth connection point 55 via the fifth electrode unit 45_3.

The sum Is of the electric currents Is_1 to Is_3 flowing into the fifth connection point 55 flows into the electric-power-source monitoring circuit 70, and based on this electric current value of the electric current Is, the electric-power-source monitoring circuit 70 determines whether or not the state of electric power supplied is normal in each of the detection circuits 30_1 to 30_3.

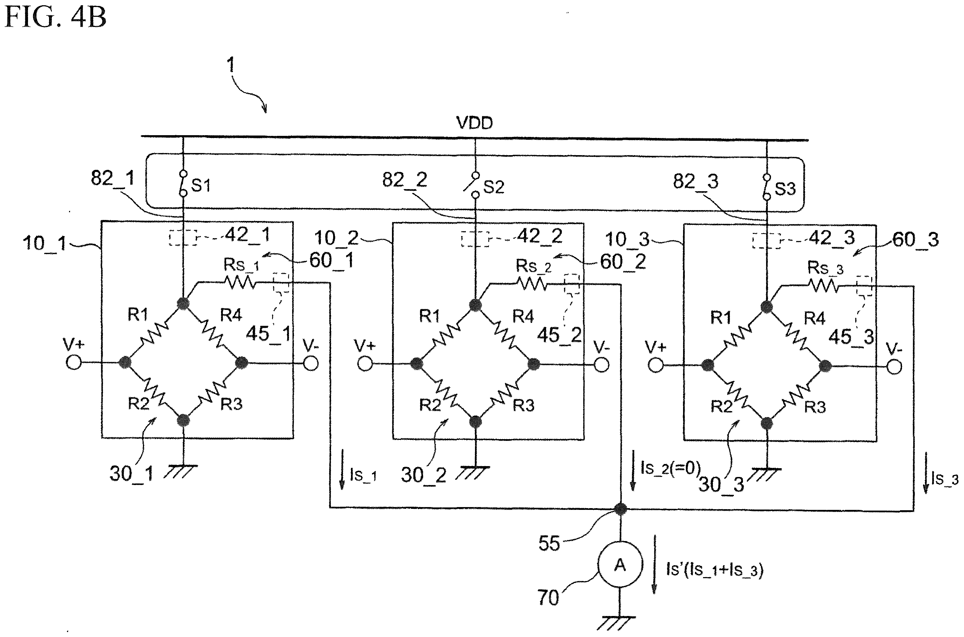

For example, as shown in FIG. 4B, when the electric power supply from the electric power source VDD to the detection circuit 30_2 is cut off due to a failure of the switch S2, electric current does not substantially flow through the detection resistor Rs_2, and the electric current Is_2 output from the electric-power-state detection unit 60_2 is thus substantially zero. On the other hand, since electric power is normally supplied from the electric power source VDD to the detection circuit 30_1 and the detection circuit 30_2, the electric current Is_1 (Is_1 > 0) is output from the electric-power-state detection unit 60_1, and the electric current Is_3 (Is_3 > 0) is output from the electric-power-state detection unit 60_3. Thus, the electric current Is' detected in the electric-power-source monitoring circuit 70 is equal to the sum of Is_1 and Is_3 (Is' = Is_1 + Is_3).

In this way, if there is an abnormality in the state of electric power supplied to the detection circuit 30_2, the electric current output from the fifth connection point 55 to the electric-power-source monitoring circuit 70 varies from Is shown in FIG. 4A (Is = Is_1 + Is_2 + Is_3) to Is' shown in FIG. 4B (Is' = Is_1 + Is_3). This variation range ΔI (ΔI = Is - Is' = Is_2) is a unique value corresponding to the resistance value of the detection resistor Rs_2 (i.e., a value corresponding to VDD/Rs_2). Thus, based on the unique value, the electric-power-source monitoring circuit 70 can easily determine that there is an abnormality in the state of electric power supplied to the detection circuit 30_2.

Note that, the electric-power-source monitoring circuit 70 stores in advance the data of the electric current values of the electric currents Is_1 to Is_3 flowing through the electric-power-state detection units 60_1 to 60_3. When these values and an electric current value of actually detected electric current Is or Is' are compared and further calculated, it is possible to determine which of the detection circuits 30_1 to 30_3 has an abnormality in the state of electric power supplied.

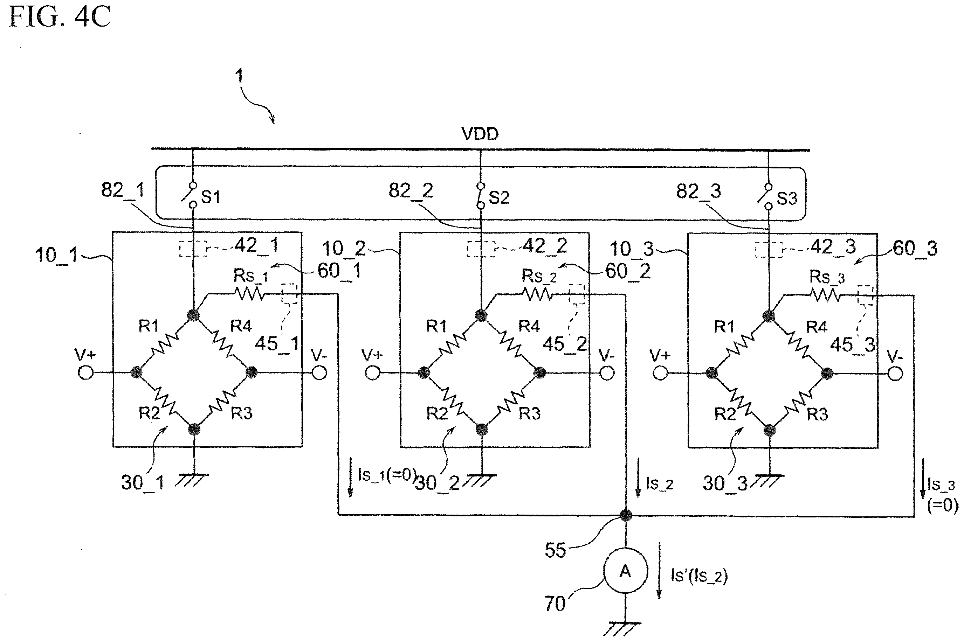

Next, as shown in FIG. 4C, when electric power supply from the electric power source VDD to the detection circuits 30_1 and 30_3 is interrupted due to the failures of the switch S1 and the switch S3, since electric current does not substantially flow through the detection resistors Rs_1 and Rs_3, the electric current Is_1 output from the electric-power-state detection unit 60_1 is substantially zero, and the electric current Is_3 output from the electric-power-state detection unit 60_3 is substantially zero. On the other hand, since electric power is normally supplied from the electric power source VDD to the detection circuit 30_2, the electric current Is_2 (Is_2 > 0) is output from the electric-power-state detection unit 60_2. Thus, the electric current Is detected by the electric-power-source monitoring circuit 70 is equal to Is_2.

In this way, if there is an abnormality in the state of electric power supplied to the detection circuits 30_1 and 30_3, the electric current output from the fifth connection point 55 to the electric-power-source monitoring circuit 70 varies from Is shown in FIG. 4A (Is = Is_1 + Is_2 + Is_3) to Is' shown in FIG. 4C (Is' = Is_2). This variation range ΔI (ΔI = Is - Is' = Is_1 + Is_3) is a unique value corresponding to the resistance value of each of the detection resistors Rs_1 and Rs_3 (i.e., a value corresponding to VDD/Rs_1 + VDD/Rs_3). Thus, based on this unique value, the electric-power-source monitoring circuit 70 can easily determine that there is an abnormality in the state of electric power supplied to the detection circuits 30_1 and 30_3.

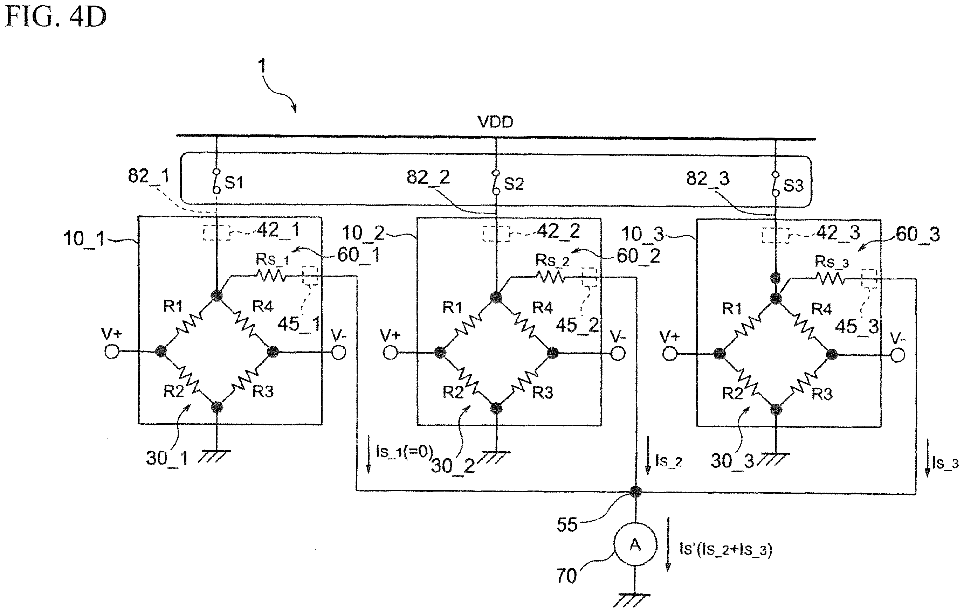

As shown in FIG. 4D, when the connection wiring 82_1 connecting between the switch S1 and the second electrode portion 42_1 of the pressure sensor 10_1 is disconnected, electric power supply from the electric power source VDD to the detection circuit 30_1 is cut off. Thus, in this case, electric current does not substantially flow through the detection resistor Rs_1, and the electric current Is_1 output from the electric power state detection unit 60_1 is thus substantially zero. As a result, the value of the electric current Is' detected in the electric-power-source monitoring circuit 70 is Is_2 + Is_3, and the electric current value detected in the electric-power-source monitoring circuit 70 varies from the electric current value Is shown in FIG. 4A by ΔI (ΔI =Is - Is' = Is_1). Thus, based on this variation range (a value corresponding to VDD/Rs_1), the electric-power-source monitoring circuit 70 can easily determine that there is an abnormality in the state of electric power supplied to the detection circuit 30_1.

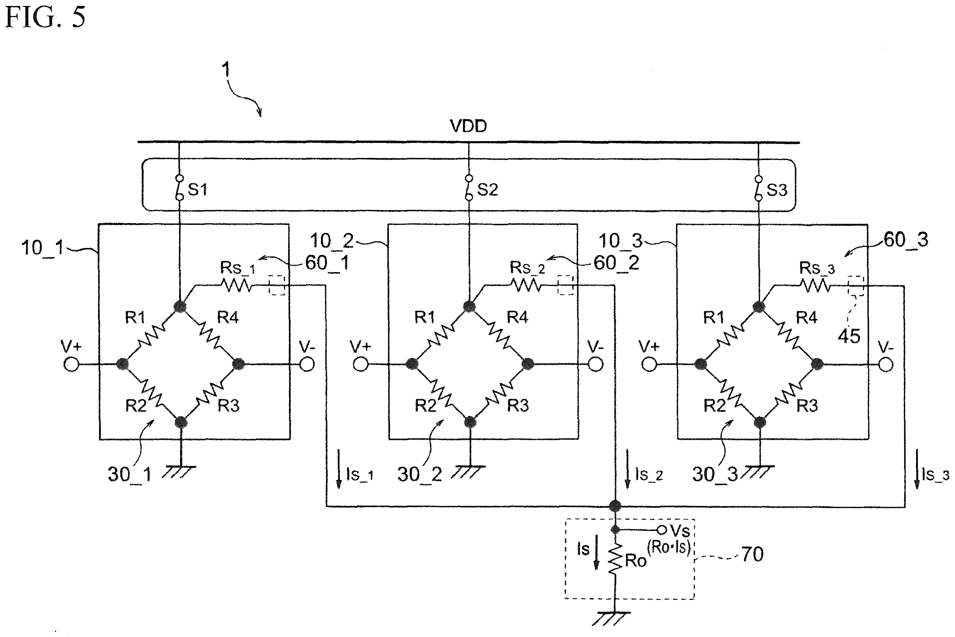

In the example shown in FIG. 4A to FIG. 4D, the electric-power-source monitoring circuit 70 determines whether or not there is an abnormality in the state of electric power supplied to any of the detection circuits 30_1 to 30_3 based on the electric current value of the electric current Is or Is' output from the fifth connection point 55. As shown in FIG. 5, however, the output resistance Ro may be connected to the fifth connection point 55 so as to convert the electric current flowing through the output resistance Ro into a voltage and perform the above-described determination based on this voltage value Vs (Ro Is). Note that, one end of the output resistance Ro is electrically connected to the fifth connection point 55, and the other end of the output resistance Ro is grounded.

Here, when the sensor system 1 is provided with three detection circuits 30_1 to 30_3 as shown in FIG. 4A, eight patterns are possible as combinations of the states of electric power (ON/OFF states) supplied to the detection circuits 30_1 to 30_3 as shown in Table 1. Table 1 shows values of the electric currents Is_1 to Is_3 output from the electric-power-state detection units 60_1 to 60_3 and a value of the electric current Is at the fifth connection point 55 in each pattern, for example, when the voltage of the electric power source VDD is 5V, the value of the detection resistor Rs_1 is 40 kS2, the value of the detection resistor Rs_2 is 20 kQ, and the value of the detection resistor Rs_3 is 10 kS2.

**Table 1**

| Pattern | Detection Circuit 30_1 | Detection Circuit 30_2 | Detection Circuit 30_3 | Electric Current Is_1 (mA) | Electric Current Is_2 (mA) | Electric Current Is_3 (mA) | Electric Current Is (mA) |
|---|---|---|---|---|---|---|---|
| Pattern 1 | OFF | OFF | OFF | 0 | 0 | 0 | 0 |
| Pattern 2 | ON | OFF | OFF | 0.125 | 0 | 0 | 0.125 |
| Pattern 3 | OFF | ON | OFF | 0 | 0.25 | 0 | 0.25 |
| Pattern 4 | ON | ON | OFF | 0.125 | 0.25 | 0 | 0.375 |
| Pattern 5 | OFF | OFF | ON | 0 | 0 | 0.5 | 0.5 |
| Pattern 6 | ON | OFF | ON | 0.125 | 0 | 0.5 | 0.625 |
| Pattern 7 | OFF | ON | ON | 0 | 0.25 | 0.5 | 0.75 |
| Pattern 8 | ON | ON | ON | 0.125 | 0.25 | 0.5 | 0.875 |

That is, as shown in Pattern 1, Is_1 = Is_2 = Is_3 = 0 mA is satisfied when all of the detection circuits 30_1 to 30_3 are OFF, and Is (Is_1 + Is_2 + Is_3) = 0 mA is thus satisfied. As shown in Pattern 2, Is_1 = 0.125 mA and Is_2 = Is_3 = 0 mA are satisfied when only the detection circuit 30_1 is ON, and Is = 0.125 mA is thus satisfied. As shown in Pattern 3, Is_1 = 0 mA, Is_2 = 0.25 mA, and Is_3 = 0 mA are satisfied when only the detection circuit 30_2 is ON, and Is = 0.25 mA is thus satisfied. As shown in Pattern 4, Is_1 = 0.125 mA, Is_2 = 0.25 mA, and Is_3 = 0 mA are satisfied when only the detection circuit 30_3 is OFF, and Is = 0.375 mA is thus satisfied. As shown in Pattern 5, Is_1 = 0 mA, Is_2 = 0 mA, and Is_3 = 0.5 mA are satisfied when only the detection circuit 30_3 is ON, and Is = 0.5 mA is thus satisfied. As shown in Pattern 6, Is_1 = 0.125 mA, Is_2 = 0 mA, and Is_3 = 0.5 mA are satisfied when only the detection circuit 30_2 is OFF, and Is = 0.625 mA is thus satisfied. As shown in Pattern 7, Is_1 = 0 mA, Is_2 = 0.25 mA, and Is_3 = 0.5 mA are satisfied when only the detection circuit 30_1 is OFF, and Is = 0.75 mA is thus satisfied. As shown in Pattern 8, Is_1 = 0.125 mA, Is_2 = 0.25 mA, and Is_3 = 0.5 mA are satisfied when all of the detection circuits 30_1 to 30_3 are ON, and Is = 0.875 mA is thus satisfied.

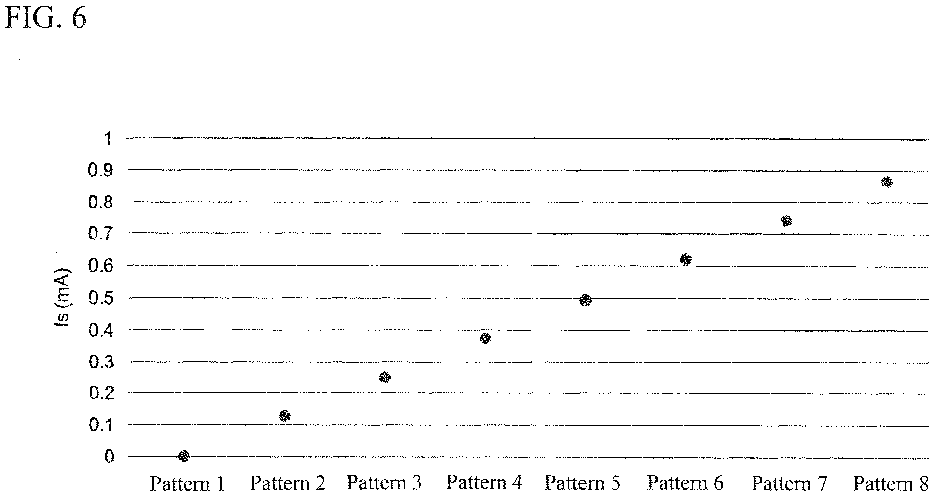

As shown in FIG. 6, when the states of electric power supplied to the detection circuits 30_1 to 30_3 are changed from Pattern 1 to Pattern 8, the value of Is changes linearly. In the present embodiment, since the resistance values of the detection resistors Rs_1 to Rs_3 are set to 40 kS2, 20 kS2, and 10 kQ, respectively, so as to double based on the relation of geometric progression, the difference in Is between Patterns is 0.125 mA, and it is possible to prevent the values of Is from being duplicated between Patterns. That is, in the present embodiment, Is_1 ≠ Is_2 ≠ Is_3, Is_1 + Is_2 ≠ Is_3, Is_1 + Is_3 ≠ Is_2, and Is_2 + Is_3 ≠ Is_1 are satisfied. Thus, the value of Is in the electric-power-source monitoring circuit 70 is detected, and it is thereby possible to determine with high accuracy which detection circuit has an abnormality in the state of electric power supplied.

As described above, in the present embodiment, only by detecting the electric current output from the fifth connection point 55 shown in FIG. 4A, it is possible to determine which detection circuit has an abnormality in the state of electric power supplied to the detection circuits 30_1 to 30_3, and it is not necessary to independently detect the state of electric power for each of the detection circuits 30_1 to 30_3 (in other words, it is not necessary to detect the state of electric power by the number of detection circuits 30_1 to 30_3). Thus, it is possible to prevent the configuration of the sensor system 1 from being complicated.

### Second Embodiment

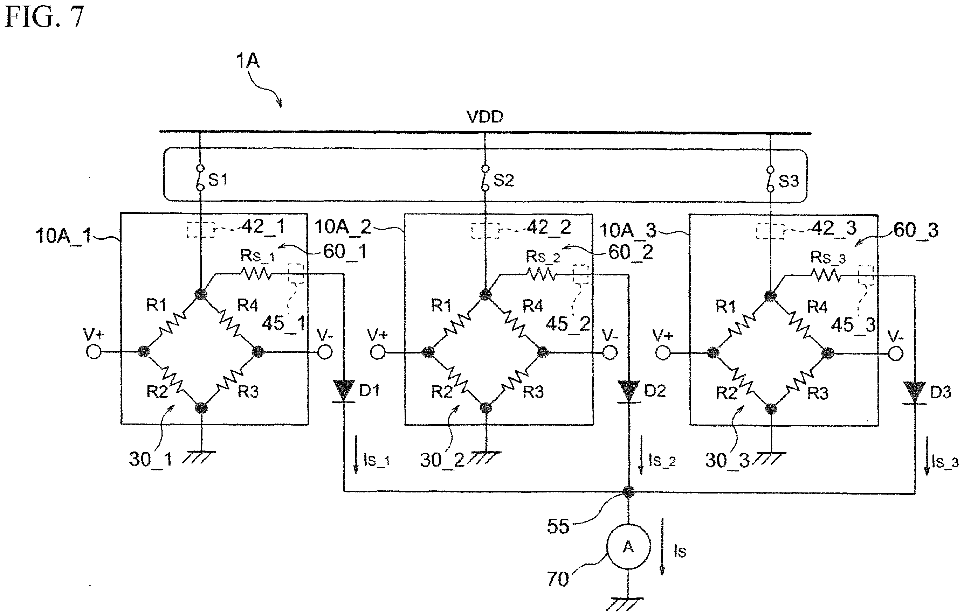

Except for the following matters, a sensor system 1A including pressure sensors 10A_1 to 10A_3 according to Second Embodiment of the present invention shown in FIG. 7 has a similar structure and demonstrates similar effects to the sensor system 1 according to First Embodiment. In the figure, common members with the sensor system 1 according to First Embodiment are denoted by common reference numerals and are not described.

As shown in FIG. 7, in the sensor system 1A, a diode D1 is inserted between a detection resistor Rs_1 and the fifth connection point 55, a diode D2 is inserted between a detection resistor Rs_2 and the fifth connection point 55, and a diode D3 is inserted between a detection resistor Rs_3 and the fifth connection point 55. The anode of the diode D1 is electrically connected to the detection resistor Rs_1, and the cathode of the diode D1 is electrically connected to the fifth connection point 55. The anode of the diode D2 is electrically connected to the detection resistor Rs_2, and the cathode of the diode D2 is electrically connected to the fifth connection point 55. The anode of the diode D3 is electrically connected to a detection resistor Rs_3, and the cathode of the diode D3 is electrically connected to the fifth connection point 55.

The diodes D1 to D3 are formed, for example, on the substrate portion 81 shown in FIG. 1. In this case, each of the diodes D1 to D3 may be connected to each of the fifth electrode portions 45_1 to 45_3 connected to the other ends of the detection resistors Rs_1 to Rs_3 via the connection wiring 82 shown in FIG. 1.

Instead, the diodes D1 to D3 may be formed on membrane 22 as thin film diodes. In this case, the diodes D1 to D3 are produced by patterning a conductive thin film (semiconductor thin film) made of a predetermined material into a predetermined shape by a thin film method, such as sputtering and vapor deposition. Also, the other ends of the detection resistors Rs_1 to Rs_3 are connected to the diodes D1 to D3 via the pattern on the membrane 22.

Thus, in the present embodiment, the diodes D1 to D3 are electrically connected to the other ends of the detection resistors Rs_1 to Rs_3 provided on the respective pressure sensors 10A_1 to 10A_3. Then, the electrode portions 45_1 to 45_3 electrically connected to the other ends of the detection resistors Rs_1 to Rs_3 provided on the respective pressure sensors 10A_1 to 10A_3 are electrically connected to each other via the diodes D1 to D3.

Thus, if there is an abnormality in the state of electric power supplied to any of the detection circuits 10A_1 to 10A_3, it is possible to prevent electric current from flowing into this detection circuit from the other detection circuits.

For example, let us assume that there is an abnormality in the state of electric power supplied to the detection circuit 10A_1. At this time, the voltage applied to the detection circuit 10A_1 is substantially 0V, and a voltage having a predetermined voltage value is applied from the electric power source VDD to each of the detection circuit 10A_2 and the detection circuit 10A_3. Thus, if no measures are taken, electric current may flow from the detection circuit 10A_2 and the detection circuit 10A_3 into the detection circuit 10A_1 due to the potential difference between the detection circuits 10A_2 and 10A_3 and the detection circuit 10A_1, and a weak voltage may be output from the electric-power-state detection unit 60_1. In the present embodiment, since the diode D1 is inserted next to the detection resistor Rs_1, it is possible to prevent such a reverse electric current flow via the diode D1 and to prevent the generation of the above-described problems.

### Third Embodiment

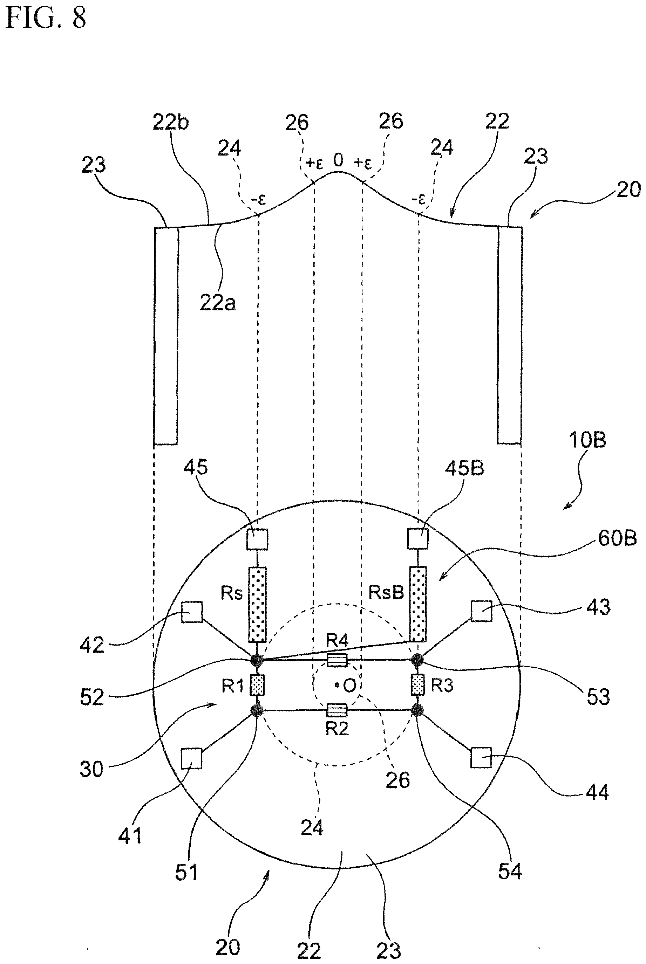

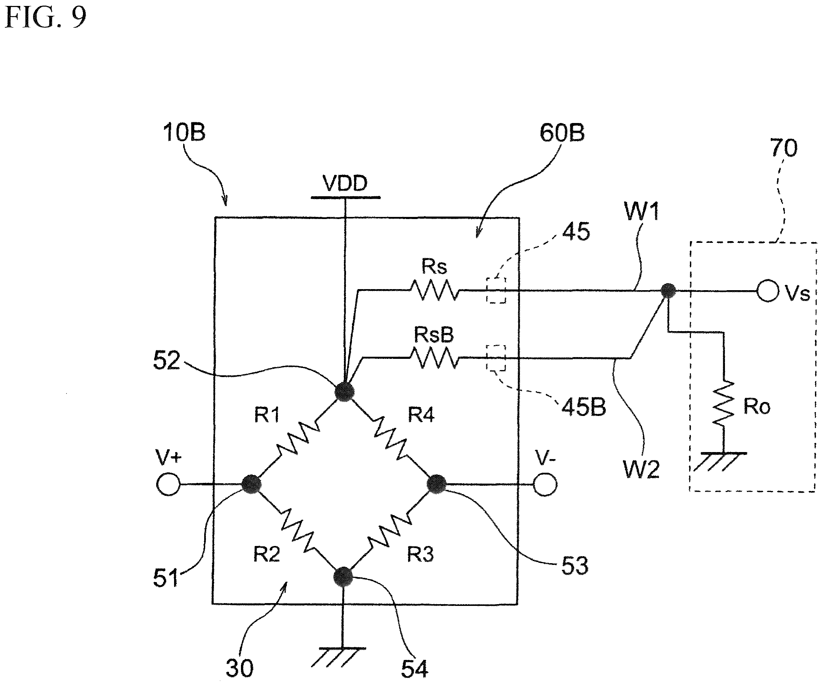

Except for the following matters, a pressure sensor 10B according to Third Embodiment of the present invention shown in FIG. 8 and FIG. 9 has a similar structure and demonstrates similar effects to the sensor system 1 according to First Embodiment. In the figures, common members with the sensor system 1 according to First Embodiment are denoted by common reference numerals and are not described.

As is clear from comparison between FIG. 8 and FIG. 2, the pressure sensor 10B according to the present embodiment is different from the pressure sensor 10 according to First Embodiment in that the pressure sensor 10B includes an electric-power-state detection unit 60B instead of the electric-power-state detection unit 60. The electric-power-state detection unit 60B is different from the electric-power-state detection unit 60 according to First Embodiment in that the electric-power-state detection unit 60B includes a detection resistor RsB in addition to the detection resistor Rs. The resistance value of the detection resistor RsB is equal to the resistance value of the detection resistor Rs, but may be different from the resistance value of the detection resistor Rs.

One end of the detection resistor RsB is electrically and physically connected to the second connection point 52. However, the detection resistor RsB may be indirectly connected to the second connection point 52 as long as the detection resistor RsB is electrically connected to the second connection point 52. Also, the detection resistor RsB may be connected to a position shifted from the second connection point 52 as long as the detection resistor RsB is electrically connected to the second connection point 52.

A fifth electrode portion 45B is electrically and physically connected to the other end of the detection resistor RsB. However, the fifth electrode portion 45B may be indirectly connected to the other end of the detection resistor RsB as long as the fifth electrode portion 45B is electrically connected to the other end of the detection resistor RsB.

The fifth electrode portion 45B is connected to the electrode portion (or conductive line) on the substrate portion 81 via the connection wiring 82 or the like shown in FIG. 1. The fifth electrode portion 45B is electrically connected to the fifth electrode portion 45 on the substrate portion 81 (see FIG. 9).

On the upper surface of the membrane 22, the detection resistor RsB is formed on the side where the third sensor resistor R3 is located, and the detection resistor Rs is formed on the side where the first sensor resistor R1 is located. Moreover, the detection resistor RsB is formed in a region with a small strain together with the detection resistor Rs. For more detail, the detection resistor RsB and the detection resistor Rs are formed between the first strain region 24 and the outer periphery 23 of the membrane 22.

However, the positions of the detection resistor RsB and the detection resistor Rs are not limited to the illustrated ones and may be changed as appropriate. For example, one of the detection resistor RsB and the detection resistor Rs may be formed in the vicinity of the first strain region 24, and the other of the detection resistor RsB and the detection resistor Rs may be formed in the outer periphery 23 of the membrane 22. Moreover, at least a part of the detection resistor RsB may be formed in a region on the inner side of the first strain region 24 in the radial direction, and at least a part of the detection resistor Rs may be formed in a region on the inner side of the first strain region 24 in the radial direction. Instead, the detection resistor RsB and the detection resistor Rs may be formed in the outer periphery 23 of the membrane 22.

The extending direction of the detection resistor RsB is substantially the same as the extending direction of the detection resistor Rs, and the detection resistor RsB and the detection resistor Rs are arranged so as to face each other. In the illustrated example, each of the detection resistor RsB and the detection resistor Rs extends from the first strain region 24 toward the outer periphery 23 of the membrane 22, but the extending directions of the detection resistor RsB and the detection resistor Rs are not limited to them. Similarly to the detection resistor Rs shown in FIG. 2, each of the detection resistor RsB and the detection resistor Rs shown in FIG. 8 may extend in a meandering shape along the circumferential direction of the membrane 22. In this case, the detection resistor RsB may be located radially outside (or inside) the membrane 22 relative to the detection resistor Rs. Instead, at least one of the detection resistor RsB and the detection resistor Rs may extend radially along the radial direction of the membrane 22.

Moreover, the extending directions of the detection resistor RsB and the detection resistor Rs may be different from each other. For example, one of the detection resistor RsB and the detection resistor Rs may extend along the circumferential direction of the membrane 22, and the other of the detection resistor RsB and the detection resistor Rs may extend from the first strain region 24 toward the outer periphery 23 of the membrane 22.

As shown in FIG. 9, in the present embodiment, a first conductive path W1 passing through the detection resistor Rs and a second conductive path W2 passing through the detection resistor RsB are formed in parallel between the fifth connection point 52 and the electric-power-source monitoring circuit 70. Thus, when electric power is normally supplied from the electric power source VDD to the detection circuit 30, electric current flows through each of the first conductive path W1 and the second conductive path W2, and each electric current is output to the electric-power-source monitoring circuit 70. Then, the sum of the electric currents flowing through the first conductive path W1 and the second conductive path W2 is converted into a voltage value by the electric-power-source monitoring circuit 70, and based on this converted value, it is possible to determine the state of electric power supplied to the detection circuit 30.

Note that, in the illustrated example, the first conductive path W1 and the second conductive path W2 are connected next to the detection resistor Rs and the detection resistor RsB, but may be formed as separate conductive paths without being connected. In this case, the electric-power-source monitoring circuit 70 determines the state of electric power supplied to the detection circuit 30 based on the electric current value (or voltage value) of the electric current flowing through at least one of the first conductive path W1 and the second conductive path W2.

Accordingly, in the present embodiment, it is possible to detect the electric currents flowing through the detection resistors Rs and RsB via the fifth electrode portions 45 and 45B electrically connected to the other ends of the respective detection resistors Rs and RsB. Thus, for example, even if the electric current flowing through the detection resistor Rs (first conductive path W1) cannot be detected due to disconnection of the wire bonding or the like connecting the fifth electrode portion 45 and the electrode portion of the substrate portion 81 (see FIG. 1), it is still possible to detect the electric current flowing through the detection resistor RsB (second conductive path W2) and to enhance the availability of the electric-power-state detection unit 60B. Moreover, the durability of the detection resistors Rs and RsB can be improved by distributing electric current to the detection resistors Rs and RsB.

### Fourth Embodiment

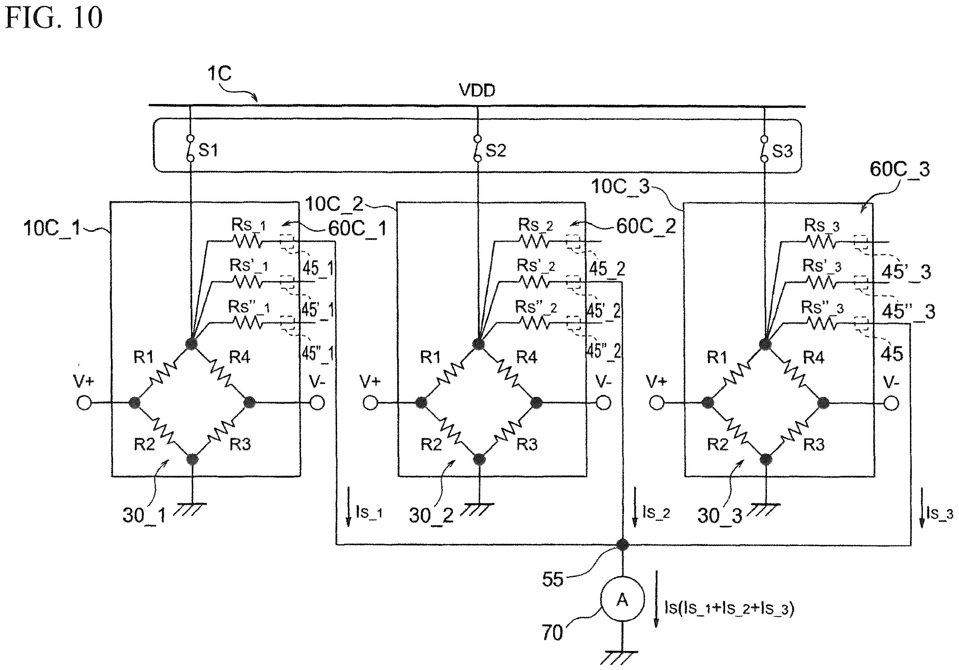

Except for the following matters, a sensor system 10C including pressure sensors 10C_1 to 10C_3 according to Fourth Embodiment of the present invention shown in FIG. 10 has a similar structure and demonstrates similar effects to the sensor system 1 according to First Embodiment. In the figure, common members with the sensor system 1 according to First Embodiment are denoted by common reference numerals and are not described.

As is clear from comparison between FIG. 10 and FIG. 4A, the pressure sensor 10C_1 includes an electric-power-state detection unit 60C_1, and the electric-power-state detection unit 60C_1 is different from the electric-power-state detection unit 60_1 according to First Embodiment in that the electric-power-state detection unit 60C_1 includes a detection resistor Rs'_1 and a detection resistor Rs"_1 in addition to the detection resistor Rs_1. Also, the pressure sensor 10C_2 includes an electric-power-state detection unit 60C_2, and the electric-power-state detection unit 60C_2 is different from the electric-power-state detection unit 60_2 according to First Embodiment in that the electric-power-state detection unit 60C_2 includes a detection resistor Rs'_2 and a detection resistor Rs"_2 in addition to the detection resistor Rs_2. Also, the pressure sensor 10C_3 includes an electric-power-state detection unit 60C_3, and the electric-power-state detection unit 60C_3 is different from the electric-power-state detection unit 60_3 according to First Embodiment in that the electric-power-state detection unit 60C_3 includes a detection resistor Rs'_3 and a detection resistor Rs"_3 in addition to the detection resistor Rs_3.

The resistance values of the detection resistor Rs_1, the detection resistor Rs'_1, and the detection resistor Rs"_1 are different from each other and are preferably determined stepwise so as to be different values at a substantially constant ratio. For example, the resistance value of the detection resistor Rs_1 is 10 kS2, the resistance value of the detection resistor Rs'_1 is 20 kQ, and the resistance value of the detection resistor Rs"_1 is 40 kQ, and these resistance values are determined based on the relation of geometric progression. However, the resistance values of the detection resistors Rs_1 to Rs"_1 are not limited to them and may be changed as appropriate.

The resistance values of the detection resistor Rs_2, the detection resistor Rs'_2, and the detection resistor Rs"_2 are different from each other and are preferably determined stepwise so as to be different values at a substantially constant ratio. For example, the resistance value of the detection resistor Rs_2 is 10 kS2, the resistance value of the detection resistor Rs'_2 is 20 kQ, and the resistance value of the detection resistor Rs"_2 is 40 kQ, and these resistance values are determined based on the relation of geometric progression. However, the resistance values of the detection resistors Rs_2 to Rs"_2 are not limited to them and may be changed as appropriate.

The resistance values of the detection resistor Rs_3, the detection resistor Rs'_3, and the detection resistor Rs"_3 are different from each other and are preferably determined stepwise so as to be different values at a substantially constant ratio. For example, the resistance value of the detection resistor Rs_3 is 10 kS2, the resistance value of the detection resistor Rs'_3 is 20 kQ, and the resistance value of the detection resistor Rs"_3 is 40 kQ, and these resistance values are determined based on the relation of geometric progression. However, the resistance values of the detection resistors Rs_3 to Rs"_3 are not limited to them and may be changed as appropriate.

As described above, the resistance values of the detection resistor Rs_1, the detection resistor Rs_2, and the detection resistor Rs_3 are equal to each other. Also, the resistance values of the detection resistor Rs'_1, the detection resistor Rs'_2, and the detection resistor Rs'_3 are equal to each other. Also, the resistance values of the detection resistor Rs"_1, the detection resistor Rs"_2, and the detection resistor Rs"_3 are equal to each other.

In the electric-power-state detection unit 60C_1, a fifth electrode portion 45'_1 is electrically and physically connected to the other end of the detection resistor Rs'_1, and a fifth electrode portion 45"_1 is electrically and physically connected to the other end of the detection resistor Rs"_1. Among the fifth electrode portion 45_1, the fifth electrode portion 45'_1, and the fifth electrode portion 45"_1, only the fifth electrode portion 45_1 is electrically connected to the fifth connection point 55.

In the electric-power-state detection unit 60C_2, a fifth electrode portion 45'_2 is electrically and physically connected to the other end of the detection resistor Rs'_2, and a fifth electrode portion 45"_2 is connected to the other end of the detection resistor Rs"_2. Among the fifth electrode portion 45_2, the fifth electrode portion 45'_2, and the fifth electrode portion 45"_2, only the fifth electrode portion 45'_2 is electrically connected to the fifth connection point 55.

In the electric-power-state detection unit 60C_3, a fifth electrode portion 45'_3 is electrically and physically connected to the other end of the detection resistor Rs'_3, and a fifth electrode portion 45"_3 is connected to the other end of the detection resistor Rs"_3. Among the fifth electrode portion 45_3, the fifth electrode portion 45'_3, and the fifth electrode portion 45"_3, only the fifth electrode portion 45'_3 is electrically connected to the fifth connection point 55.

Thus, the electric current Is_1 is output from the electric-power-state detection unit 60C_1 via the detection resistor Rs_1, the electric current Is_2 is output from the electric-power-state detection unit 60C_2 via the detection resistor Rs'_2, and the electric current Is_3 is output from the electric-power-state detection unit 60C_3 via the detection resistor Rs"_3. Then, the electric current Is, which is the sum of the electric currents Is_1, Is_2, and Is_3, is output to the electric-power-source monitoring circuit 70.

In this way, since the electric-power-state detection unit 60C_1 is provided in advance with detection resistors Rs'_1 and Rs"_1 in addition to the detection resistor Rs_1, a detection resistor having a desired resistance value can be appropriately selected and used from the detection resistors Rs_1 to Rs"_1 according to usage conditions. Thus, in the pressure sensor 10_1, it is not necessary to trim the detection resistor Rs_1 so that its resistance value becomes a desired resistance value. The same applies to the pressure sensors 10_1 and 10_2.

Also, in the present embodiment, in each of the pressure sensors 10C_1 to 10C_3, the sensor system 1C with the detection resistors having different resistance values can be easily constructed only by appropriately selecting a detection resistor connected to the fifth connection point 55.

Note that, the present invention is not limited to the above-described embodiments and may variously be modified within the scope of the present invention.

(1) A diode may be connected to the other end of the detection resistor Rs or to the other end of the detection resistor RsB by applying the technique shown in Second Embodiment described above to Third Embodiment described above. Also, diodes may be connected to the other ends of the detection resistors Rs_1 to Rs"_1, Rs_2 to Rs"_2, and Rs_3 to Rs"_3 by applying the technique shown in Second Embodiment described above to Fourth Embodiment described above.
(2) A sensor system may be constructed by connecting pressure sensors 10B in Third Embodiment described above.
(3) Each of the electric-power-state detection units 60_1 to 60_3 may be provided with the detection resistor RsB by applying the technique shown in Third Embodiment described above to Second Embodiment described above. Each of the electric-power-state detection units 60C_1 to 60C_3 may be provided with detection resistors RsB by applying the technique shown in Third Embodiment described above to Fourth Embodiment described above.
(4) In Third Embodiment described above, the number of detection resistors RsB is not limited to one and may be plural.
(5) In Fourth Embodiment described above, each of the pressure sensors 10C_1 to 10C_3 is provided with three detection resistors, but the number of detection resistors may be two or four or more.
(6) In each of Embodiments described above, the shape and fixing structure of the membrane 22 are merely an example, and the pressure sensor 10 of the present invention can employ any other shape and fixing structure that allows the membrane 22 to appropriately deform according to pressure. Moreover, the membrane 22 is not limited to only the stem or metal plate shown in each of Embodiments described above, and it is also possible to employ a membrane having another shape and material.

### Explanation of References

1, 1A, 1C... sensor system
10, 10_1, 10_2, 10_3, 10A_1, 10A_2, 10A_3, 10B, 10C_1, 10C_2, 10C_3... pressure sensor
12... connection member
12a... screw groove
12b... flow path
14... holding member
20... stem
21... flange portion
22... membrane
22a... inner surface
22b... outer surface
24... first strain region
26... second strain region
30, 30_1, 30_2, 30_3... detection circuit
R1... first sensor resistor
R2... second sensor resistor
R3... third sensor resistor
R4... fourth sensor resistor
Ro... output resistance
41, 42, 43, 44, 45, 45_1, 45_2, 45_3, 45B, 45'_1, 45'_2, 45'_3, 45"_1, 45"_2, 45"_3... electrode portion
51, 52, 53, 54, 55... connection point
60, 60_1, 60_2, 60_3, 60B, 60C_1, 60C_2, 60C_3... electric-power-state detection unit
Rs, Rs_1, Rs_2, Rs_3, RsB, Rs'_1, Rs"_1, Rs'_2, Rs"_2, Rs'_3, Rs"_3... detection resistor
D1, D2, D3... diode
70... electric-power-state detection unit
82, 82_1-82_3 ... connection wiring

## Claims

1. A pressure sensor comprising:
a membrane deformable according to pressure;
sensor resistors formed on the membrane and constituting a detection circuit; and
a detection resistor formed on the membrane and having one end electrically connected to the detection circuit and an other end electrically connected to an electrode portion formed on the membrane.

2. The pressure sensor according to claim 1, wherein one end of the detection resistor is electrically connected to a conductive path between the detection circuit and an electric power source for supplying electric power to the detection circuit.

3. The pressure sensor according to claim 1 or 2, wherein
the detection resistor comprises detection resistors,
the electrode portion comprises electrode portions, and
the electrode portions are electrically connected to the respective other ends of the detection resistors.

4. A sensor system comprising pressure sensors according to any of claims 1 to 3, wherein
the detection circuits provided to the respective pressure sensors are electrically connected to a common electric power source, and
the electrode portions electrically connected to the other ends of the detection resistors provided to the respective pressure sensors are electrically connected to each other.

5. The sensor system according to claim 4, wherein the detection resistors provided to the respective pressure sensors have different resistance values.

6. The sensor system according to claim 4 or 5, wherein the detection resistors provided to the respective pressure sensors have stepwise resistance values set at a predetermined ratio.

7. The sensor system according to any of claims 4 to 6, wherein
each of the pressure sensors is provided with the detection resistors having different resistance values, and
the electrode portions electrically connected to the other end of any one of the detection resistors provided to the respective pressure sensors are electrically connected to each other between the pressure sensors.

8. The sensor system according to any of claims 4 to 7, wherein
diodes are electrically connected to the other ends of the detection resistors provided to the respective pressure sensors, and
the electrode portions electrically connected to the other ends of the detection resistors provided to the respective pressure sensors are electrically connected to each other via the diodes.
